# EUROPEAN PATENT APPLICATION

(11) **EP 2 377 382 A1**
(43) Date of publication of application: **19.10.2011**
(21) Application number: 11425095.4
(22) Date of filing: 08.04.2011
(51) Int. Cl.: A01B 61/04

(54) **Mounting assembly for a "flex spring" or similar soil working tool**

(30) Priority: 14.04.2010 IT RM20100179
(71) Applicant: Palminteri, Samuel, 92016 Ribera (AG) (IT); Palminteri, Giuseppe Elia, 92016 Ribera (AG) (IT)
(72) Inventor: Palminteri, Samuel, 92016 Ribera (AG) (IT); Palminteri, Giuseppe Elia, 92016 Ribera (AG) (IT)

(57) **Abstract**

A mounting assembly for a "flex spring" or similar soil working tool comprises a connection (1) to an agricultural implement frame, a tool holder support (3), a tool (2) and a hydraulic cylinder (4) being interposed between the connection (1) and the tool holder support (3). The tool holder support (3) is in the shape of an angular lever, on whose upper part a base for fixing the tool (2) is provided and on whose fork-shaped end the hydraulic cylinder (4) is mounted that is linked to the other end thereof to the connection (1).

## Description

The present invention relates to a mounting assembly for a "flex spring" or similar soil working tool. The so called "flex spring" is an elastic tool that, being mounted to a frame of an agricultural implement, penetrates the soil and elastically reacts to the normal resistance exercised by the same soil when the agricultural implement travels. However, when the "flex spring" encounters an obstacle like a great stone or a rock formation, the "flex spring", although it is elastic, would buckle plastically so to become useless.

Previous documents already describe an equipment used in soil tillage able to rotate a tool upward in order to overcome an underground obstacle. For example U.S. patent 3,321,027, granted to Johnson et al. on 26 August 1965, describes an equipment used in soil tillage comprising at least a plough unit and a support therefor being mounted as a swinging unit by a complex arrangement of bars articulated on a beam of the agricultural equipment. The swinging unit is provided with shock absorber means that allows it to swing upward when the plough unit travels on the obstacle in order to overcome it, and to snap return downward in the soil, once the obstacle is overcome. In the cited patent, the same swinging unit is presented in a first embodiment in which the shock absorber means uses a coil spring and a second embodiment in which the shock absorber means uses an hydraulic cylinder and a circuit therefor.

There are other documents that disclose mounting assemblies for spring soil-working tools on an agricultural implement. U.S. patent No. 4,011,915 granted to Anderson on 15 March 1977 describes an agricultural implement comprising a yoke removably mounted to a traverse of the agricultural implement, and a swinging tool holder having a shape corresponding to the yoke designed to be partially sandwiched between arms of yoke. Between the yoke and the swinging tool holder that has opposite abutting tabs, there is mounted a torsion coil spring acting to pull so that the swinging tool holder with the tool is permanently pulled toward the yoke in such a manner that the opposite abutting tabs are stopped by the arms of the yoke. Therefore, when the tool normally works the soil, its swinging tool holder is oriented downwards; when the tool encounters an underground obstacle, it is rotated upward against the antagonistic action of the coil spring. Once the obstacle is overcome, the tool snap returns downward until its tool holder returns to abut against the yoke. The mounting arrangement described in U.S. patent 4,011,915 is considerably simpler than the equipment used in soil tillage described by U.S.patent 3,321,027. However, in U.S. patent 4,011,915 there is a risk of a rapid collapse due to fatigue stresses to which the yoke is submitted that is heavily affected by the tool holder upon its snap return, when the tool returns to its normal work condition.
The risk is increased by the fact that the coil spring is not adjustable in its operation and therefore can not be adapted to different working conditions arising from the nature and condition of the soil.

A research on the subject-matter of the invention that was carried out by the European Patent Office on request of Italian Patent and Trademark Office, pointed out as a relevant prior art U.S. patent No. 4,609,051 and Canadian patent application No. 2,199,335.

U.S. 4,609,051 describes a mounting assembly of a tillage tool including a connection in two upper and lower separate parts on an agricultural implement frame, a tool holder support made in three separate pieces consisting of double rods and toggle articulated between them, a tool made of two separated pieces, and a coil spring that is considered equivalent to a hydraulic cylinder, the coil spring being interposed between an upper portion of the connection and a piece of the tool holder support in the shape of a toggle. A lower portion of the connection includes a pair of parallel molded flanges in one piece with an angular square pipe section cooperating with a U-bolt, to fix the mounting assembly on the agricultural implement frame. Bushings are welded on the pair of shaped flanges on opposite sides thereof, the bushings being designed to receive a pivot on which the tool holder support in three pieces is mounted in a swinging manner. On the upper portion of the third piece there is a base for fixing the tool, and on one fork end thereof there is mounted the coil spring that is articulated in the other end thereof on the connection.
U.S. 4,609,051 has a large number of components, and many of them are joined together in pivot points. It is known that the presence of many components in relative motion between them, increases the risk of breakage both due to wear and caused by shocks.

Further, the Canadian patent application No. 2,199,335 describes a mounting assembly of a soil working tool and, similarly to U.S. 4,609,051, has a tool holder support made in three separate pieces consisting of double rods and being toggle articulated between them. For this reason, the Canadian patent application has the disadvantage of the breakage of components.

In this context, the technical task underlying the present invention is to propose a mounting assembly for a "flex spring" or similar soil working tool that overcomes the disadvantages mentioned above of the prior art.
In particular, an object of the present invention is to provide a mounting assembly that is not likely to be subjected to heavy fatigue stresses as a result of the snap behaviour of the tool holder.
Another object of the present invention is to create a mounting assembly of a "flex spring" which is simple in its construction and consists of a reduced number of parts. Yet another purpose of the invention is to create a mounting assembly of a "flex spring" that is cheaper to be manufactured and assembled than the devices of the prior art, and that also involves a reduction in assembly time compared to them in both the plant and the field.
Another purpose of the present invention is to create a mounting assembly for a "flex spring" which allows a adjustable operation of the tool snap.

The specified technical task and the objects are substantially achieved by a mounting assembly for a "flex spring" or similar soil working tool, including the technical features stated in one or more of the enclosed claims.

Further features and advantages of the present invention will be mostly clear by the indicative, and therefore non limiting, description of a preferred and not exclusive embodiment of a mounting assembly for a "flex spring" or similar soil working tool, as illustrated in the accompanying drawings in which:
- Figure 1 is a schematic side view showing three successive positions of the mounting assembly of the "flex spring" and the same " flex spring " in facing an obstacle;
- Figure 2 is a top view of the mounting assembly of Figure 1;
- Figures 3a and 3b show a support for the mounting assembly in a side view and in a top view without bolts and pivot of the mounting assembly of Figure 1;
- Figures 4a, 4b and 4c show a tool holder in a side view, a plan view from below and a plan view from above respectively, of the same, and
- Figures 5a and 5b show a tool in a top view and in a side view, respectively.

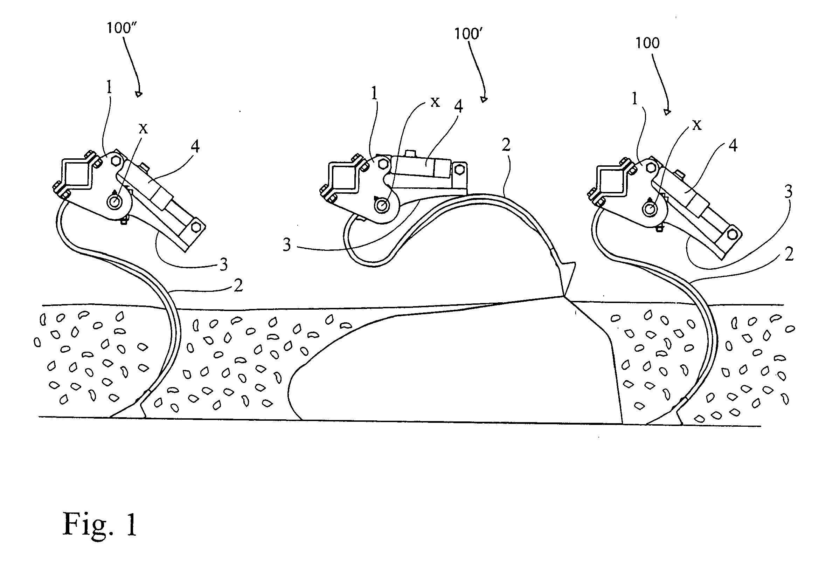

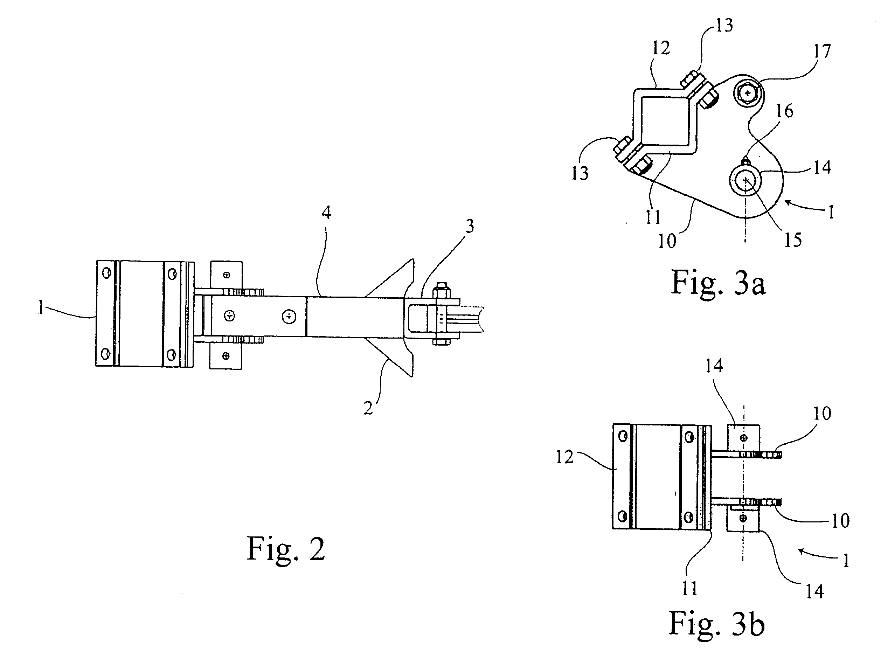

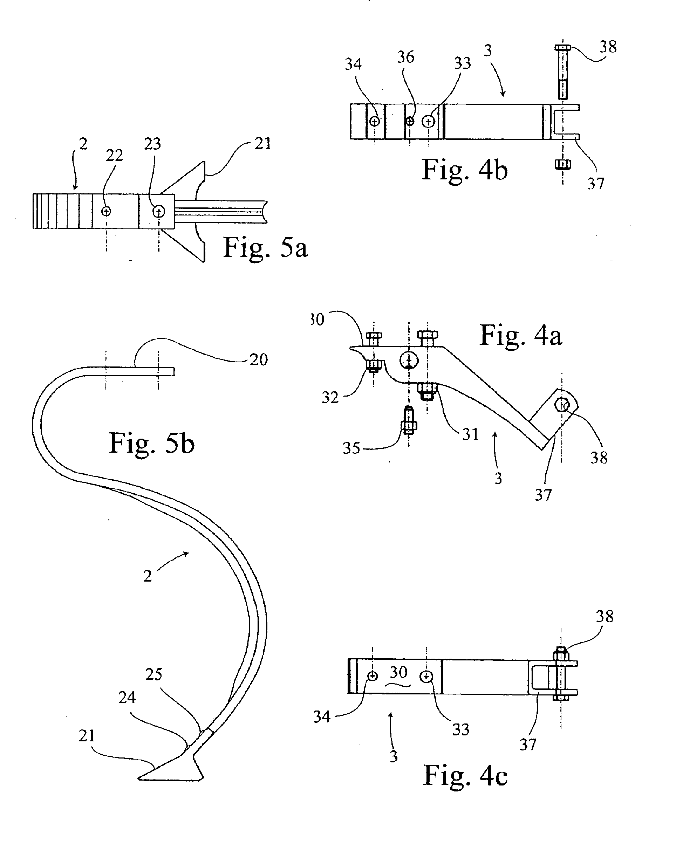

Reference is made initially to Figure 1, in which there are shown in three successive positions 100, 100 ', 100" the mounting assembly of tool and the tool itself in facing an obstacle when the tool is sunk into the ground. The mounting assembly comprises a flanged connection 1, a tool 2, a tool holder support 3 and a hydraulic cylinder 4, the circuit of which is not represented.
Referring also to Figure 2, which is a top view of the assembly of Figure 1, it may be understood that the flanged connection 1 is bolted to a traverse (not shown) of a frame of an agricultural implement, and the tool holder support 3 is pivoted in a swinging manner about an axis x. Near one end thereof the support 3 carries the tool 2, and in the opposite end it has a pivot point of the hydraulic cylinder 4, whose other end is articulated on attachment flange 1.
The above-mentioned main parts of the mounting assembly in accordance with the present invention will be described in greater detail with reference to Figures 3 to 5. In particular, in Figures 3a and 3b the flanged connection 1 is shown in a side view and in a top view. The flanged connection 1 comprises a couple of parallel shaped flanges 10, 10, which are in one piece with an angular square pipe section 11 cooperating with a U-bolt 12 obtained from a similar square pipe. The angular square pipe section 11 of the flanged connection 1 and the U-bolt 12 allow the mounting assembly to be fixed on the traverse of the agricultural implement frame by means of bolts indicated generically as 13 and not shown in the top view of the Figure 3b. A pair of bushings 14, 14, that are designed to receive a pivot 15 according to the axis x, are welded to the couple of shaped flanges 10, 10 on opposite sides thereof. The rotating coupling between the bushings 14, 14 and the pivot 15 is properly lubricated with grease nipples 16 (Figure 3a). On the pivot 15 there is mounted the tool holder support 3 in a swinging manner.
On the pair of shaped flanges 10, 10 there are also provided coaxial holes designed to form a seat of a bolt 17 for mounting the hydraulic cylinder 4.
Referring to figures 4a, 4b and 4c, in which the tool holder support 3 is shown in a side view and in a plan view from below and from above, respectively, one can see that the tool holder support 3 is shaped like an angular lever. On the upper portion 30 of the tool holder support 3 is provided a base for mounting the tool 2 with bolts 31, 32 in respective holes 33, 34 of tool holder support 3 (shown in Figures 5b and 5c). A dowel 35 in a hole 36 is intended to lock the pivot 15. The tool holder support 3 has a fork end 37. In coaxial holes of the fork end 37 is inserted a bolt 38 for mounting the hydraulic cylinder 4, as shown in Figure 2.
Turning to figures 5a and 5b, in which the tool 2 is shown for the mounting assembly according to the invention, the tool 2, in the form of a substantially S-shaped ribbed "flex spring" comprises an upper flat portion 20 designed to engage the upper portion 30 of tool holder support 3. Here the tool 2 is secured with bolts 31, 32 passing through holes 23, 22 of its upper flat portion 20. The tool 2 ends in the bottom with a plow 21 joined with screws 24 and 25 to the "flex spring".
The hydraulic cylinder 4 is articulated between the bolt 17 of the flanged connection 1 and the bolt 38 of the tool holder support 3. The pressure of the internal fluid, i.e. oil or air depending on the type of hydraulic circuit, is adjusted to create a desired reaction to the swinging upwards of the tool 2 carried by the tool holder support 3. The hydraulic system that allows such an adjustment is not represented because it is widely known in the art.
Returning to Figure 1, the mounting assembly with tool 100 is approaching a partially underground obstacle, in the position 100' the obstacle is overcome by rotating the tool 2 with the tool holder support 3 about the axis x, due to the fact that a piston rod of the hydraulic cylinder 4 is retracted into the body of the same. Once the obstacle is overcome, in 100" the tool is snapped again in the normal working position.
By virtue of the structure of the mounting assembly according to the invention the tool is not subjected to heavy fatigue stresses as a result of the snap behaviour of the tool holder. The mounting assembly is simple in its construction and is composed of a reduced number of parts. Thanks to the hydraulic circuit, an adjustable operation of the tool snap is obtained.

## Claims

1. A mounting assembly for a "flex spring" or similar soil working tool comprising a connection (1) to an agricultural implement frame, a tool holder support (3), a tool (2) and a mechanical actuator being interposed between the connection (1) and the tool holder support (3), in which the connection (1) comprises a couple of shaped flanges (10, 10) that are parallel to each other and integral with an angular section (11) being obtained from a square pipe and cooperating with a U-bolt (12) for fixing the mounting assembly to the agricultural implement frame, a pair of bushings (14, 14) being oppositely welded to the couple of shaped flanges (10, 10) and designed to receive a pivot (15) on which the tool holder support (3) is mounted in a swinging manner, **characterised in that** the tool holder support (3) is shaped like an angular lever, on an upper part (30) of the tool holder (3) a base for fixing the tool (2) being provided and on a fork-shaped end (37) of the tool holder (3) the mechanical actuator is mounted that is linked to the other end thereof to the connection (1).

2. The mounting assembly according to claim 1, wherein the mechanical actuator is a hydraulic cylinder (4).
